# EUROPEAN PATENT APPLICATION

(11) **EP 4 215 314 A1**
(43) Date of publication of application: **26.07.2023**
(21) Application number: 22216879.1
(22) Date of filing: 28.12.2022
(51) Int. Cl.: B25F 5/02, B23D 57/02, B27B 17/00

(54) **ELECTRIC WORKING MACHINE**

(30) Priority: 20.01.2022 JP 2022006795
(71) Applicant: Yamabiko Corporation, Ohme-shi Tokyo 198-8760 (JP)
(72) Inventor: OSAWA, Hisato, Ohme-shi, Tokyo, 1988760 (JP); NISHIMURA, Atsushi, Ohme-shi, Tokyo, 1988760 (JP)
(74) Representative: Winter, Brandl - Partnerschaft mbB

(57) **Abstract**

The present invention provides a simple configuration to facilitate removal of the battery. According to an aspect of the present invention, an electric working machine is provided. The electric working machine comprises an electric working portion and a main body portion. The electric working portion is configured to operate by electric power supplied from a battery. The main body portion includes a battery holding portion having a holding space for inserting the battery in an insertion direction and holding the battery. The battery holding portion includes a plurality of openings including a first opening through which the battery passes when inserted and a second opening provided at a position that is separated from a front end of the battery held in the holding space in the insertion direction.

## Description

### BACKGROUND

### TECHNICAL FIELD

The present invention relates to an electric working machine.

### RELATED ART

JP 2018-88853 A discloses a technology of an electric working machine with a detachable battery, wherein a force is applied by a spring member when a switch is pressed to facilitate removal of the battery.

If a battery is detachable, it is desirable that the battery should be easy to remove. However, the technology disclosed in JP 2018-88853 A requires a special mechanism such as a switch and a spring member to facilitate removal of the battery.

In view of the above circumstances, the present invention provides a simple configuration to facilitate removal of a battery.
(1) According to an aspect of the present invention, an electric working machine is provided. The electric working machine comprises an electric working portion and a main body portion. The electric working portion is configured to operate by electric power supplied from a battery. The main body portion includes a battery holding portion having a holding space for inserting the battery in an insertion direction and holding the battery. The battery holding portion includes a plurality of openings including a first opening through which the battery passes when inserted and a second opening provided at a position that is separated from a front end of the battery held in the holding space in the insertion direction.

According to such an aspect, a battery can be easily removed with a simple configuration.

### BRIEF DESCRIPTION OF THE DRAWINGS

FIG. 1 is a diagram showing an overall configuration of a chain saw 1.
FIG. 2 is a diagram showing the chain saw 1 viewed from above.
FIG. 3 is a diagram showing the chain saw 1 viewed from below.
FIG. 4 is an AA arrow view shown in FIG. 2.
FIG. 5 is an enlarged view showing an area near a battery 6 shown in FIG. 4.
FIG. 6 is an enlarged view showing an area near a battery 6 shown in FIG. 1.

### DETAILED DESCRIPTION

Hereinafter, embodiments of the present invention will be described with reference to drawings. Various features described in the embodiment below can be combined with each other.

### <Embodiment>

In the present embodiment, a chain saw for cutting a tree, a board, or the like will be described as an example of an electric working machine according to the present invention.

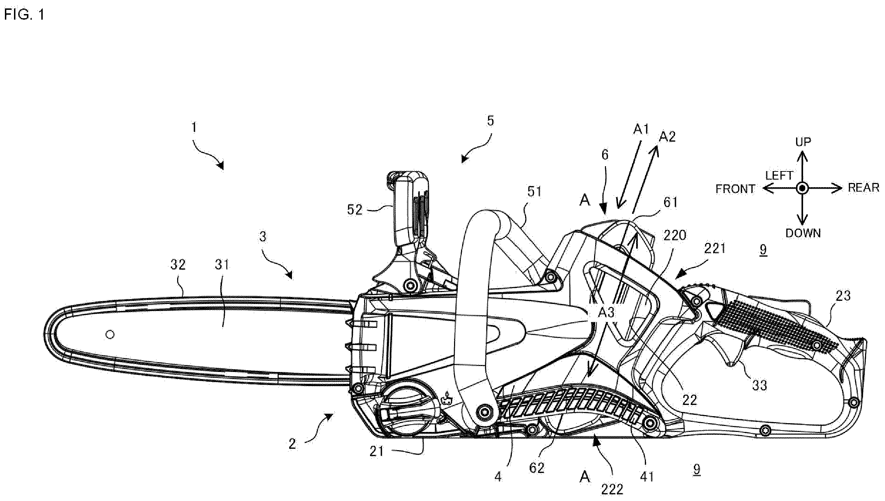

FIG. 1 is a diagram showing an overall configuration of a chain saw 1. In FIG. 1, the chain saw 1 viewed from left is shown. In the chain saw 1, an up-down direction, a front-back direction, and a left-right direction are defined as shown in FIG. 1. In the present embodiment, the up-down direction of the chain saw 1 is defined as a vertical direction when the chain saw 1 is placed on a flat and horizontal installation surface. The front-back direction is defined as a direction orthogonal to the up-down direction, and the left-right direction is defined as a direction orthogonal to the up-down direction and the front-back direction. The front-back direction and the left-right direction will be described in detail later.

The chain saw 1 comprises a main body portion 2, a working portion 3, an intake 4, a handle portion 5, and a battery 6. The working portion 3 is provided on the main body portion 2 and is an example of an electric working portion that is operated by electric power and directly acts on a work object when an operator performs work using the chain saw 1. The work performed by the operator is, in the present embodiment, cutting a tree, a board, etc. The working portion 3 comprises a guide bar 31, a saw chain 32, and a lever 33. The guide bar 31 is a plate-shaped member that extends along a longitudinal direction A3, and a rear end of the guide bar 31 is attached to the main body portion 2. The annular saw chain 32 is wound around a periphery of the guide bar 31.

Although not shown in FIG. 1, the main body portion 2 stores a control board, a drive gear, and a motor. The saw chain 32 is engaged to the drive gear. The drive gear is driven by the motor to rotate. The control board executes a control process to control rotation of the motor when the lever 33 is operated. With the above configuration, when the operator operates the lever 33, the motor controlled by the control board allows the drive gear to rotate, and such rotational power allows the saw chain 32 to rotate along the periphery of the guide bar 31.

The main body portion 2 is a housing (also called a case) formed of resin or other material that stores the motor and other components described above. The main body portion 2 includes a bottom surface portion 21, a battery holding portion 22, and a rear handle 23. The bottom surface portion 21 is a portion that contacts an installation surface when the chain saw 1 is placed on the flat installation surface. In the present embodiment, although the bottom surface portion 21 includes a flat surface in contact with the installation surface, the bottom surface portion 21 can be shaped to be in contact with the installation surface at a plurality of sides or points, as long as the chain saw 1 is stable when placed on the installation surface. The battery holding portion 22 detachably holds the battery 6. The rear handle 23 is provided at a rear side of the main body portion 2 and is a part for the operator to grip when performing electric work. The rear handle 23 is a bar-shaped portion elongated in the front-back direction and is formed with a dimension to be easily gripped by the operator with hand.

The intake 4 includes an intake port 41 and forms a passage for cooling air taken in through the intake port 41 to be fed to an inside of the main body portion 2. The handle portion 5 includes a front handle 51 and a front hand guard 52. The front handle 51 is provided on a front side of the main body portion 2 and is a part for the operator to grip when performing electric work. The front handle 51 is provided from an upper side to a left side of the main body portion 2 and is held to be switched between vertically and horizontally cutting the work object. The front hand guard 52 is a part that protects a hand holding the front handle 51 from injury and functions as a brake to allow an operation of the working portion 3 to stop.

As described above, regarding the chain saw 1, the operator holds the front handle 51 and the rear handle 23 to carry the main body portion 2 and allows the saw chain 32 to rotate to work on a work object such as a tree. In the chain saw 1, a saw chain 32 side on which work is performed is defined as a front side and a rear handle 23 side that is gripped by the operator is defined as a rear side, and direction pointing to the front side and the rear side is defined as the front-back direction. In addition, leftward and rightward directions when looking forward from the rear side are defined as the left-right direction.

The battery 6 has an elongated shape in such a manner that the battery 6 extends along the longitudinal direction A3 and is inserted into a holding space 220 of the main body portion 2 along an insertion direction A1. Hereinafter, when the battery 6 is inserted along the insertion direction A1, an end to be a rear end of the battery 6 is referred to as a rear end 61, and an end to be a front end is referred to as a front end 62. The battery 6 is removed along a takeout direction A2, which is an opposite direction of the insertion direction A1. Both the insertion direction A1 and the takeout direction A2 are in a direction along the longitudinal direction A3 of the battery 6 in a state of being held in the battery holding portion 22. In the present embodiment, the insertion direction A1 is a direction including a forward component and a downward component greater than the forward component. Furthermore, the takeout direction A2 is a direction including a backward component and an upward component greater than the backward component.

As described above, the battery holding portion 22 includes the holding space 220 that insert and hold the battery 6 in the insertion direction A1, and hold the battery 6 that is inserted into the holding space 220. The battery holding portion 22 is a set of portions in the main body portion 2 that include a surface in contact with the holding space 220. As a result, the battery holding portion 22 allows the battery 6 to be detachable. The battery holding portion 22 includes a plurality of openings at a border between the holding space 220 and an external space 9. The plurality of openings includes a first opening 221 through which the battery 6 passes when inserted into the holding space 220 of the main body portion 2 and a second opening 222 provided at a position away from the front end 62 of the battery 6 inserted into the holding space 220 in the insertion direction A1. The second opening 222 is provided with a size that allow a finger of the operator to pass.

According to such a configuration, a force can be applied to the battery 6 in the takeout direction A2 by putting a finger in the second opening 222 and pressing the front end 62 of the battery 6, thus it is easier to remove the battery 6 than in the case that the second opening 222 is not provided. In addition, since it is easier to provide the second opening 222 than, for example, to provide an takeout mechanism with a spring member and a lever, etc., in the chain saw 1, the battery 6 can be easily removed with a simpler configuration.

The first opening 221 is a place where the holding space 220 connects with the external space 9 on a rear end 61 side of the battery 6. The second opening 222 is a place where the holding space 220 connects with the external space 9 on a front end 62 side of the battery 6. In other words, regarding the battery holding portion 22 of the main body portion 2, the second opening 222 is positioned lower than the first opening 221 when the bottom surface portion 21 is placed downward. According to such a configuration, the battery 6 can be inserted into the holding space 220 using its own weight, thus the battery 6 can be easily inserted compared to the case where a positional relationship of the first opening 221 and the second opening 222 is opposite.

As described above, the battery 6 is attachable to and detachable from the holding space 220 of the main body portion 2, and supplies power to the working portion 3 while held in the main body portion 2. In this way, the working portion 3 operates with electric power supplied from the battery 6 attachable to and detachable from the main body portion 2.

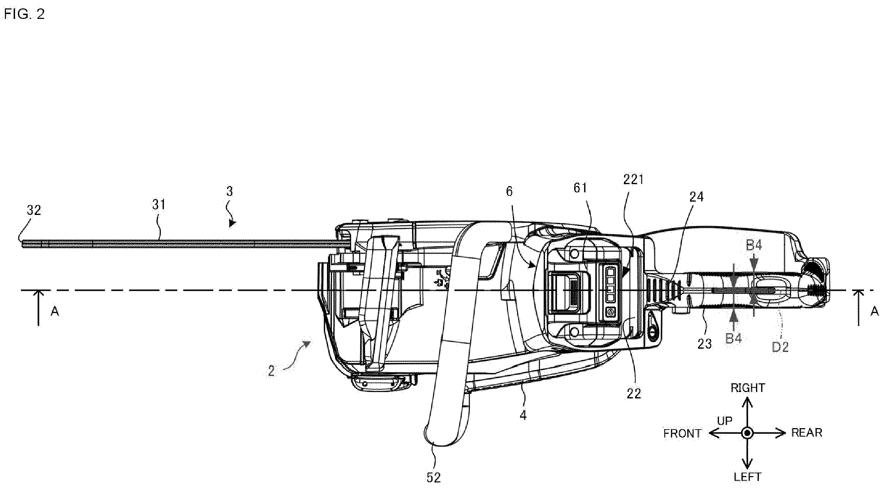

FIG. 2 is a diagram showing the chain saw 1 viewed from above. The main body portion 2 of the chain saw 1 comprises a non-slip 24 at rear of the first opening 221. The non-slip 24 is formed by a plurality of ribs, each extending in left-right direction. The non-slip 24 is a place that a thumb of the operator touches when gripping the rear handle 23 and a portion that a finger of the operator touches when removing the battery 6, and is configured in such a manner that the finger is not likely to slip when the operator removes the battery 6. A method of removing the battery 6 will be described in detail later.

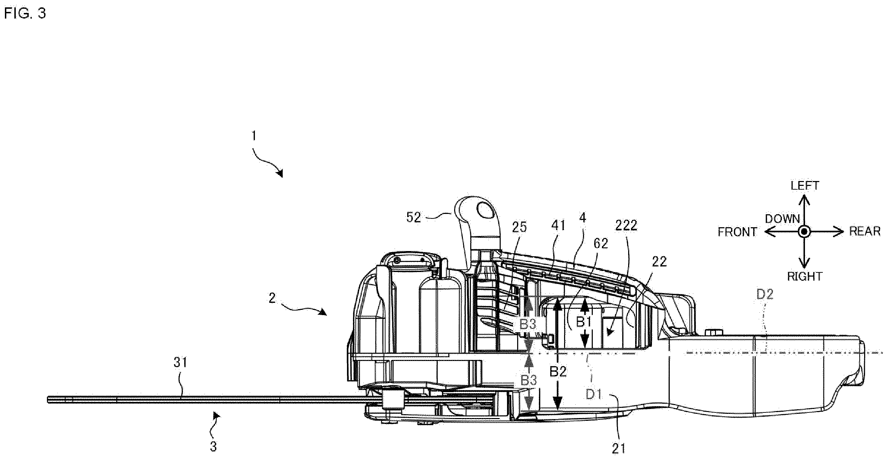

FIG. 3 is a diagram showing the chain saw 1 viewed from below. The main body portion 2 includes an exhaust port 25 at front of the second opening 222. The exhaust port 25 exhausts the cooling air that is taken in from the intake port 41 and has cooled a heat-generating component such as the motor positioned inside the main body portion 2 to the external space 9.

As mentioned above, the battery holding portion 22 includes a second opening 222 on the front end 62 side of the battery 6. The second opening 222 is an opening with a dimension of a length B1 in the left-right direction. Here, the battery 6 is a battery 6 including a dimension of a length B2 in the left-right direction longer than the length B1 in the left-right direction of the second opening 222. That is, a part of the front end 62 of the battery 6 is covered by the bottom surface portion 21. In this way, the second opening 222 has a shape and size that does not allow the battery 6 inserted into the holding space 220 to pass through the holding space 220 by the bottom surface portion 21, etc. According to such a configuration, it is easier to obtain strength of the main body portion 2 compared to the case where the second opening 222 is sized in a shape and dimension that allows the battery 6 to pass through the holding space 220 like the first opening 221.

In the present embodiment, the length B2 is twice or more the length B1. Here, a value of (B2/B1) is, for example, 2 to 10. Specifically, the value of (B2/B1) may be 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, or may be in a range between any two of the values illustrated above. For instance, a range of (B2/B1) is not limited to 2 to 10, but may be 2.1 to 5.5, 3.4 to 7.9, etc.

With such a configuration, the bottom surface portion 21 of the main body portion 2 covers half or more of the front end 62 of the battery 6 in the left-right direction. In other words, the bottom surface portion 21 of the main body portion 2 covers, on a second opening 222 side, a center (center line D1) on the front end 62 side of the battery 6 in the left-right direction. The center line D1 is a position where distances from ends in the left-right direction of the battery 6 are all become a distance B3, i.e., a line showing the center of the battery 6 in the left-right direction. With such a configuration, it is even easier to obtain strength of the main body portion 2 compared to the case where the center of the front end 62 side of the battery 6 in the left-right direction is exposed.

As mentioned above, the working portion 3 includes a saw chain 32 and a guide bar 31. The guide bar 31 is provided on a right side or a left side of the center of the main body portion 2 in the left-right direction. Then, the second opening 222 is provided in such a manner that, in the left-right direction of the main body portion 2, the center of the second opening 222 is positioned on an opposite side of the guide bar 31 from the center (center line D2) of the rear handle 23 in the left-right direction. As shown in FIG. 2, the center line D2 is positioned at a position where distances from ends of the rear handle 23 in the left-right direction are all become a distance B4, that is, a line showing the center of the rear handle 23 in the left-right direction.

In the present embodiment, the guide bar 31 is provided in such a manner that the guide bar 31 is positioned on a right side of the center line D2, and the second opening 222 is provided in such a manner that the second opening 222 is positioned on a left side of the center line D2. According to such a configuration, compared to the case where both the guide bar 31 and the second opening 222 are provided on the right side or the left side of the center of the rear handle 23 in the left-right direction, it is possible to secure a sufficient distance from the working portion 3 to the second opening 222, thus foreign matter such as chip generated during work can be prevented from entering the holding space 220.

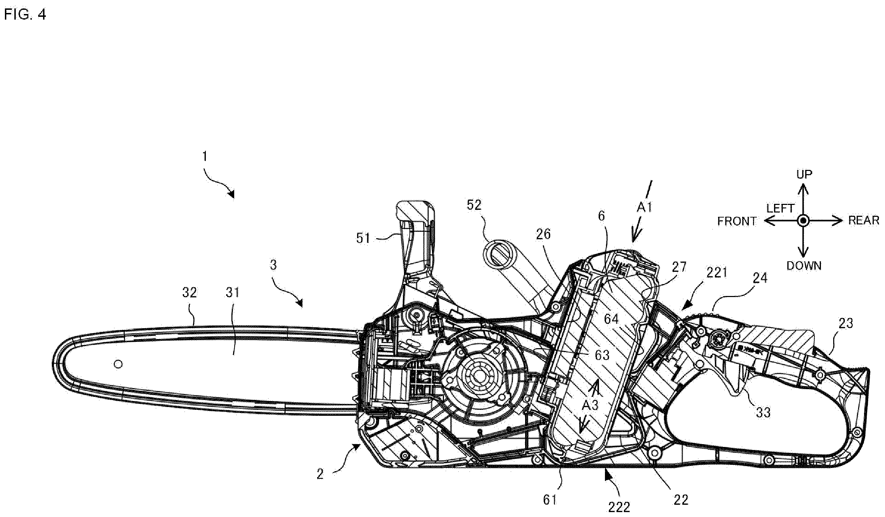

The exhaust port 25 is configured to be provided between the working portion 3 and the second opening 222. According to such a configuration, foreign matter such as chip generated during work can be prevented from entering the holding space 220 by air discharged from the exhaust port 25. Furthermore, by setting a direction of air discharged from the exhaust port 25 to a side where the working portion 3 is provided in the left-right direction (right side in FIG. 4), foreign matter such as chip is less likely to enter the holding space 220.

FIG. 4 is an AA arrow view of FIG. 2. As shown in FIG. 4, the main body portion 2 includes a first guide 26 guiding a first surface 63 of the battery 6 and a second guide 27 guiding a second surface 64 of the battery 6 opposite to the first surface 63. In the present embodiment, the first surface 63 is a front surface of the battery 6 held by the battery holding portion 22 when the chain saw 1 is placed on a flat and horizontal ground, and the second surface 64 is a rear surface of the battery 6 held by the battery holding portion 22. A groove along the longitudinal direction A3 is formed on the first surface 63 side of right surface and left surface of the battery 6, and the first guide 26 includes a rail extending along the insertion direction A1. By engaging the groove of the battery 6 into the rail of the first guide 26, the battery 6 is inserted toward the insertion direction A1 and held by the rail after insertion.

The second guide 27 is provided at a position facing the battery 6 on the first opening 221 side of the second surface 64 of the battery 6 inserted into the holding space 220. For instance, when the operator drops the rear handle 23 side, the rear side, downward in the direction of gravity and a force such as an impact is applied to the battery 6 in the front-back direction in the figure, the first guide 26 and the second guide 27 can disperse the impact. According to such a configuration, compared to the case where the battery 6 is guided only by the first guide 26, damage to the first guide 26 due to the impact on the battery 6 can be suppressed.

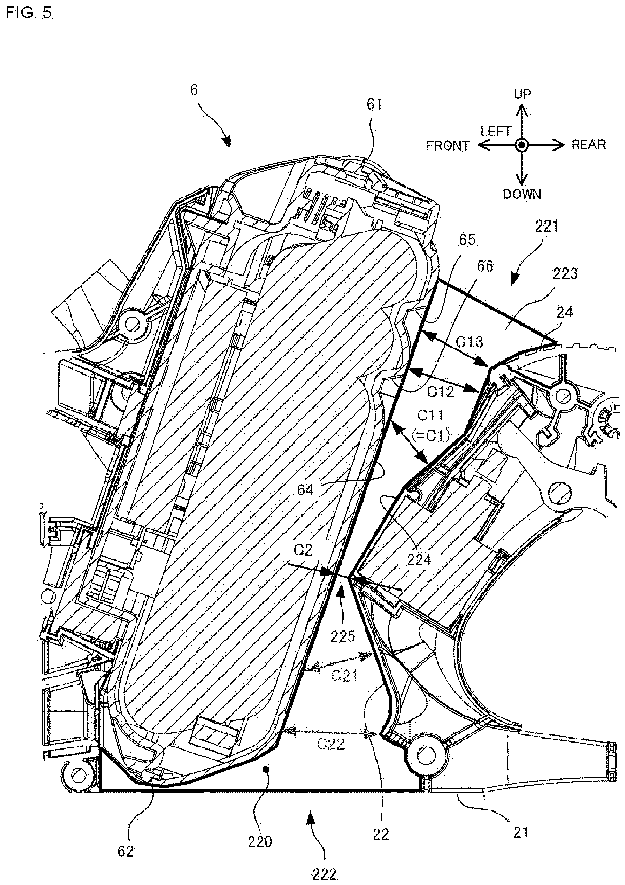

FIG. 5 is a diagram showing an enlarged view of an area near the battery 6 shown in FIG. 4. In FIG. 5, the holding space 220 except for a portion occupied by the battery 6 is painted white for clarity.

As mentioned above, the second opening 222 is provided at a position away from the front end 62 of the battery 6 inserted into the holding space 220 in the insertion direction A1. That is, the battery 6 is held in a state in which the front end 62 is recessed inside the second opening 222, as shown in FIG. 5. According to such a configuration, for example, even if the chain saw 1 is dropped onto flat ground, since the bottom surface portion 21 contacts the ground, direct transmission of impact to the battery 6 can be suppressed as compared with the case where the front end 62 is held in a state protruding from the bottom surface portion 21, thereby the battery 6 can be prevented from being damaged.

The position where the second opening 222 is provided is lower than the front end 62 of the battery 6 in the present embodiment. According to such a configuration, compared to the case where the second opening 222 is not provided lower than the front end 62, situation such as foreign matter enters through the second opening and damage the battery is less likely to happen.

The battery 6 includes a first recess portion 65 and a second recess portion 66 on the rear end 61 side of the second surface 64 as shown in FIG. 4. The first recess portion 65 and the second recess portion 66 are recesses for facilitating application of force by hooking a finger when removing the battery 6.

On the other hand, the battery holding portion 22 of the main body portion 2 forms, as part of the holding space 220, a crevice space 223 on the first opening 221 side. The crevice space 223 is a space sandwiched between the second surface 64 of the battery 6 held in the holding space 220 and a portion of the facing surface 224 facing the second surface 64 whose distance from the second surface 64 is equal to or greater than a first distance C1.

The first distance C1 is, for instance, a distance longer than thickness of a human finger. In FIG. 5, for instance, although a distance C11, a distance C12, and a distance C13 between the second surface 64 and the facing surface 224 are shown, the distance C11 = the first distance C1, and the distance C11 < the distance C12 and the distance C13. Therefore, in FIG. 5, the crevice space 223 is up to where the distance C11 is shown. Since the crevice space 223 is wide enough to pass a finger through, compared to the case where the crevice space 223 is not formed, it is easier to hook a finger on the battery 6.

Further, the main body portion 2 forms a crevice space 223 by the battery holding portion 22 and the battery 6 or the second guide 27, and the non-slip 24 described above is provided on the facing surface 224 facing the second surface 64 of the battery 6. When removing the battery 6, to apply force by hooking a pad of the finger on the first recess portion 65 or the second recess portion 66, back of the finger is brought into contact with the facing surface 224, and a force is applied using the contact point as a fulcrum, thereby it becomes easier to apply force to the takeout direction A2. In this case, the non-slip 24 makes the fulcrum point more stable compared to the case where the non-slip 24 is not provided, making it easier to apply force to remove the battery. Although the non-slip 24 is formed by a plurality of ribs extending in the left-right direction in the embodiment, it is not limited thereto, and may be, for instance, a plurality of protrusions, a plurality of recesses, or a surface processed with a file such as a compound or wave, etc.

Furthermore, the holding space 220 penetrates from the first opening 221 to the second opening 222 even when the battery 6 is held. Then, in a narrowest portion 225 where a distance between the second surface 64 of the battery 6 and the facing surface 224 of the battery holding portion 22 is narrowest, a distance between the two surfaces is a second distance C2.

That is, in the main body portion 2, a holding space 220 is formed from the first opening 221 to the second opening 222 in such a manner that a distance between the second surface 64 of the battery 6 held in the holding space 220 and the facing surface 224 facing the second surface 64 is equal to or longer than the second distance C2. According to such a configuration, even if an object smaller than the second distance C2 enters through the first opening 221, the object will escape to the second opening 222, thus compared to the case where the holding space 220 does not penetrate from the first opening 221 to the second opening 222, foreign matter such as chip can be prevented from accumulating in the holding space 220. In addition, since air can easily pass through the holding space 220, heat of the battery 6 can be prevented from being accumulated.

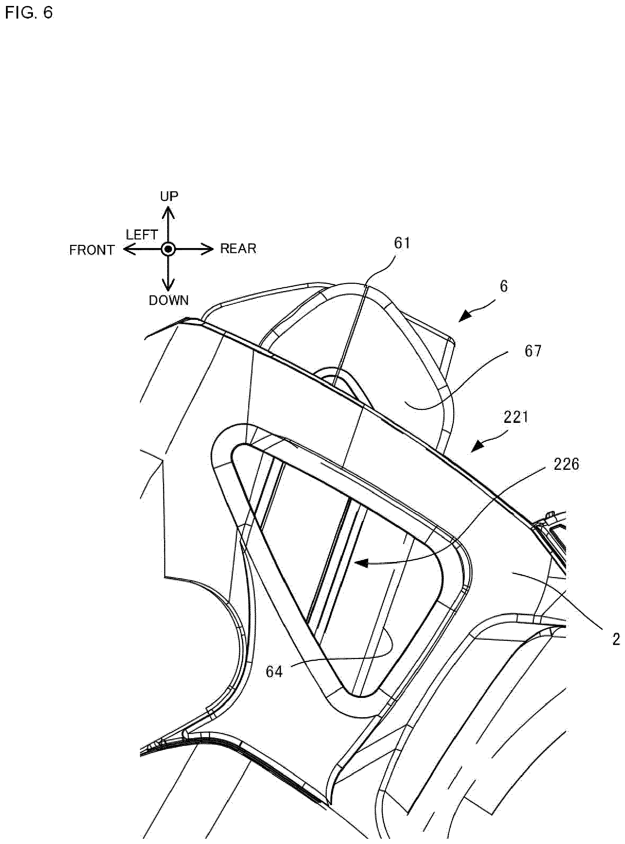

FIG. 6 is an enlarged view of an area near the battery 6 shown in FIG. 1. As shown in FIG. 6, the main body portion 2 includes a third opening 226 that allows a third surface 67 of the battery 6 sandwiched between the first surface 63 and the second surface 64 to expose to outside. The third surface 67 is a surface facing the left-right direction in the battery 6 held by the battery holding portion 22 when the chain saw 1 is placed on a flat and horizontal ground. Although the third surface 67 on a left side of the battery 6 is shown in FIG. 6, the main body portion 2 also includes a third opening 226 that allows the third surface 67 on a right side of the battery 6 to expose to outside. The main body portion 2 may include the third opening 226 on either side only. In either configuration, compared to the case where the third opening 226 is not provided, the area covering the battery 6 is smaller, and air remaining in the holding space 220 is released to the outside through the third opening 226, thus heat of the battery 6 can be prevented from being accumulated, and cooling effect of the battery 6 can be improved.

### <Other embodiments>

In the embodiment, although a chain saw is described as an example of an electric working machine, it is not limited thereto. For example, the electric working machine may be a hedge trimmer or an engine cutter. In short, any type of electric working machine may be applied as long as it comprises a working portion that operates with electric power supplied from a battery attachable to and detachable from the main body portion.

Moreover, in the embodiment, in the narrowest portion 225 where the distance between the second surface 64 of the battery 6 and the facing surface 224 of the battery holding portion 22 is the narrowest, although the distance between the two surfaces is a second distance C2 is disclosed, it is not limited thereto, and the second distance C2 may be any length as long as the narrowest portion 225 can prevent a battery with different width from being mounted.

Shape of the battery holding portion 22 of the main body portion 2 may be different from the embodiment. If the shape of the battery holding portion 22 is different, shape of the holding space 220 formed by the battery holding portion 22 also becomes different. For example, although the crevice space 223 is formed in the embodiment, the crevice space 223 may not be formed as well. Even in such a case, the battery 6 can be easily removed by pressing the battery 6 from the second opening 222.

Furthermore, in the embodiment, although the holding space 220 penetrates from the first opening 221 to the second opening 222 while the battery 6 is held, it does not have to penetrate. In this case, since there is a place where the second surface 64 of the battery 6 and the facing surface 224 of the battery holding portion 22 contact each other, stability of the held battery 6 can be improved.

In the embodiment, although the bottom surface portion 21 of the main body portion 2 covers the center of the front end 62 side of the battery 6 in the left-right direction on the second opening 222 side, the center may be exposed as well. In this case, the second opening 222 is wider compared to the case where the center is covered, making it easier to press the front end 62 of the battery 6 with a finger.

Further, in the main body portion 2, the distance from the second surface 64 of the battery 6 held in the holding space 220 to the facing surface 224 is longer as near the second opening 222 in the embodiment. According to the example shown in FIG. 5, a distance C22 from the second surface 64 at a position closer to the second opening 222 to the facing surface 224 is longer than a distance C21 from the second surface 64 to the facing surface 224. Same relationship may be established not only for the backward facing second surface 64 of the battery 6, but also for any of the forward facing or left/right facing surfaces.

In other words, a distance from any one of front, rear, left, and right surfaces of the battery 6 held in the holding space 220 to a portion of the battery holding portion 22 facing the surface may become longer as near the second opening 222. In this way, the closer to the second opening 222, the further away the battery 6 and the main body portion 2 are from each other, compare to the case that the distance between the battery 6 and the main body portion 2 does not change even positioned closer to the second opening 222, it becomes easier to put a finger into the second opening 222 and press the battery 6 through the second opening 222.

### <Appendix>

Further, the present invention may be provided with each of the following aspects.

(2) The electric working machine, wherein: the second opening is positioned lower than the first opening.

According to such a configuration, weight of the battery can be used for insertion.

(3) The electric working machine, wherein: the second opening is positioned lower than the front end of the battery.

According to such a configuration, it is possible to prevent foreign matter from entering through the second opening and damaging the battery.

(4) The electric working machine, wherein: the second opening has a shape and size that does not allow the battery inserted into the holding space to pass through.

According to such a configuration, it is possible to easily obtain strength of the main body portion.

(5) The electric working machine, wherein: the main body portion is configured to cover a center of the front end of the battery in a left-right direction on a second opening side.

According to such a configuration, the strength of the main body portion can be more easily obtained.

(6) The electric working machine, wherein: in the main body portion, a distance from any surface of front, rear, left, or right of the battery held in the holding space to a portion of the battery holding portion facing the surface is longer as near the second opening.

According to such a configuration, the battery can be easily pressed through the second opening.

(7) The electric working machine, wherein: the electric working portion includes a rear handle, a saw chain, and a guide bar, wherein the guide bar is provided on a right side or a left side of a center of the rear handle in a left-right direction, and the second opening is provided on an opposite side of the guide bar from the center of the rear handle in the left-right direction.

According to such a configuration, it is possible to prevent foreign matter from entering the space during work.

(8) The electric working machine, wherein: in the main body portion, a crevice space is formed on a first opening side where a distance between a side surface of the battery held in the holding space and a surface facing the side surface is equal to or greater than a first distance.

According to such a configuration, it is possible to easily hook a finger on the battery.

(9) The electric working machine, wherein: the main body portion is configured to provide a non-slip on a surface forming the crevice space.

According to such a configuration, it is possible to easily apply a force for removing the battery.

(10) The electric working machine, wherein: the main body portion is configured to form the holding space from the first opening to the second opening in such a manner that a distance between a side surface of the battery held in the holding space and a surface facing the side surface is equal to or greater than a second distance.

According to such a configuration, it is possible to prevent foreign matter from accumulating in the space.

(11) The electric working machine, wherein: the main body portion includes a first guide configured to guide a first surface of the battery and a second guide configured to guide a second surface opposite to the first surface of the battery.

According to such a configuration, it is possible to suppress damage of the first guide due to an impact on the battery.

(12) The electric working machine, wherein: the main body includes a third opening configured to allow a third surface sandwiched between the first surface and the second surface of the battery to expose to an outside.

According to such a configuration, cooling effect of the battery can be enhanced.

Of course, the above aspects are not limited thereto.

Further, the above-mentioned embodiments and variations may be implemented in any combination.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

## Claims

1. An electric working machine, comprising:
an electric working portion configured to operate by electric power supplied from a battery; and
a main body portion including a battery holding portion having a holding space for inserting the battery in an insertion direction and holding the battery, wherein
the battery holding portion includes a plurality of openings including a first opening through which the battery passes when inserted and a second opening provided at a position that is separated from a front end of the battery held in the holding space in the insertion direction.

2. The electric working machine according to claim 1, wherein:
the second opening is positioned lower than the first opening.

3. The electric working machine according to claim 1 or 2, wherein:
the second opening is positioned lower than the front end of the battery.

4. The electric working machine according to any one of claims 1 to 3, wherein:
the second opening has a shape and size that does not allow the battery inserted into the holding space to pass through.

5. The electric working machine according to claim 4, wherein:
the main body portion is configured to cover a center of the front end of the battery in a left-right direction on a second opening side.

6. The electric working machine according to any one of claims 1 to 5, wherein:
in the main body portion, a distance from any surface of front, rear, left, or right of the battery held in the holding space to a portion of the battery holding portion facing the surface is longer as near the second opening.

7. The electric working machine according to any one of claims 1 to 6, wherein:
the electric working portion includes a rear handle, a saw chain, and a guide bar, wherein the guide bar is provided on a right side or a left side of a center of the rear handle in a left-right direction, and
the second opening is provided on an opposite side of the guide bar from the center of the rear handle in the left-right direction.

8. The electric working machine according to any one of claims 1 to 7, wherein:
in the main body portion, a crevice space is formed on a first opening side where a distance between a side surface of the battery held in the holding space and a surface facing the side surface is equal to or greater than a first distance.

9. The electric working machine according to claim 8, wherein:
the main body portion is configured to provide a non-slip on a surface forming the crevice space.

10. The electric working machine according to any one of claims 1 to 9, wherein:
the main body portion is configured to form the holding space from the first opening to the second opening in such a manner that a distance between a side surface of the battery held in the holding space and a surface facing the side surface is equal to or greater than a second distance.

11. The electric working machine according to any one of claims 1 to 10, wherein:
the main body portion includes a first guide configured to guide a first surface of the battery and a second guide configured to guide a second surface opposite to the first surface of the battery.

12. The electric working machine according to claim 11, wherein:
the main body includes a third opening configured to allow a third surface sandwiched between the first surface and the second surface of the battery to expose to an outside.
